# EUROPEAN PATENT SPECIFICATION

(11) **EP 3 964 058 B1**
(45) Date of publication and mention of the grant of the patent: **17.04.2024**
(21) Application number: 21000255.6
(22) Date of filing: 03.09.2021
(51) Int. Cl.: A01K 97/02, F41B 3/02

(54) **A CATAPULT FOR DISPENSING BAIT FOR FISHING**
KATAPULT ZUR AUSGABE VON FISCHKÖDERN
CATAPULTE PERMETTANT DE DISTRIBUER DES APPÂTS DE PÊCHE

(30) Priority: 08.09.2020 GB 202014131
(43) Date of publication of application: 09.03.2022
(73) Proprietor: Korda Developments Ltd, Basildon, Essex SS14 OHW (GB)
(72) Inventor: Brandon, Dalton, Huntingdon, Cambridgeshire PE26 2LE (GB); Clarke, Damian Keith, Colchester, Essex CO7 6DR (GB)
(74) Representative: Burnett, Christopher James

(56) References cited:
- GB-A- 2 035 106
- GB-A- 2 282 517
- US-A- 3 983 860

## Description

This invention relates to a catapult and, more especially, this invention relates to a catapult for dispensing bait for fishing.

There are many known types of catapult for dispensing bait for fishing. An angler fires the bait from the catapult to a fishing position in water which needs to be provided with the bait in order to attract fish. The fishing position in the water may be of varying distances from the angler. These different distances require the elastic material of the catapult to be placed under different degrees of tension. Also, the firing angle of the catapult needs to be altered in dependence upon the fishing position in the water that is to receive the bait, with the angle of inclination being increased for increasing distances of the fishing position from the angler. Further, different anglers hold their catapults differently such that their arms are at different positions to their upper body. All of these different variations may produce inequalities in the tension in the elastic material during firing of the bait from the catapult. This may in turn reduce firing accuracy and/or firing distance.

GB 2035106 A discloses a catapult comprising a hand grip portion and first and second arms. Each of the first and second arms is provided with a swivel joint. The swivel joint comprises a ball member which is located in a bearing cup. The bearing cup is fixed in its arm of the catapult.

It is an aim of the present invention to reduce the above mentioned problem.

Accordingly, the present invention provides a catapult for dispensing bait for fishing, which catapult comprises a hand grip portion, first and second arms, a pouch, a first length of an elastic material extending between the first arm and a first side of the pouch, a second length of the elastic material extending between the second arm and a second side of the pouch, first connector means which connects a first end of the first length of the elastic material to the first arm, and second connector means which connects a first end of the second length of the elastic material to the second arm, and wherein the first connector means and the second connector means each comprises a swivel joint, and wherein the swivel joint comprises:
(i) a rotation-providing formation;
(ii) a fixing member which is fixed to the arm for the swivel joint; and
(iii) connector means which extends away from the arm for the swivel joint and which connects to the elastic material for the arm for the swivel joint,
and wherein:
(iv) the fixing member extends transversely of a longitudinal axis of the swivel joint; and
(v) each of the arms (6, 8) has a connecting formation (42) to which the swivel joint (28) is connected by the fixing member (36), and wherein the connecting formation (42) comprises a housing (44) and a recess (46) in the housing (44), in which the swivel joint (28) extends into the recess (46), and in which the fixing member (36) extends transversely through the housing (44) and into the swivel joint (28), wherein the rotation-providing formation permits the connector means to rotate with respect to the fixing member about the longitudinal axis of the swivel joint.

The provision of the swivel joint is advantageous in that the catapult is able to be produced such that the first and second lengths of the elastic material align between the first and second arms and the pouch. This alignment enables the first and second lengths of the elastic material to take up optimum positions, and to minimise any biasing of the elastic material that might adversely affect optimum firing, for example optimum accuracy and/or optimum distance. The first and second lengths of the elastic material are able to self-align as an angler pulls back the pouch with respect to the arms and thereby puts the first and second lengths of the elastic material under varying degrees of tension in dependence upon the position in the water that is to receive the bait. The self-aligning is able to take place with different anglers firing bait with different degrees of tension in the elastic material, with different firing angles of inclination and with different holding positions of the catapult, all as may be adopted by different anglers. Thus the catapult of the present invention is able to optimise the firing of the bait and this is very desirable for anglers in general who always wish to ensure their best possible chances for catching fish. It is especially desirable for anglers in competitions where accurate feeding of bait is essential for enabling anglers to compete successfully in competitions.

The provision of the swivel joint is also advantageous in that the rotation-providing formation provides good rotation even when the swivel joint is under frictional forces caused by the angler pulling back the pouch with respect to the arms and thereby putting the first and second lengths of the elastic material under varying degrees of tension. Without the rotation-providing formation, the tension may be such as to restrict the easy rotation of the swivel joint and thus reduce the effectiveness of the self-aligning of the first and second lengths of the elastic material. With the rotation-providing formation, the self-aligning is able to take place with optimum effectiveness even when the angler is pulling back the pouch sufficiently hard to obtain long distance firing of the bait by the catapult. Also the use of the fixing member in conjunction with the rotation-providing formation enables the swivel joint easily to be connected to the arms of the catapult and this facilitates low cost assembly of the catapult with its various component parts.

The rotation-providing formation may be a ball formation. The ball formation may be a ball race. Other types of rotation-providing formation may be employed, for example a roller formation such for example as a plain roller bearing or a tapered roller bearing.

The catapult is one in which each of the arms has a connecting formation to which the swivel joint is connected by the fixing member. The catapult is one in which the connecting formation comprising a housing and a recess in the housing, in which the swivel joint extends into the recess, and in which the fixing member extends transversely through the housing and into the swivel joint.

The catapult may be one in which the swivel joint comprises a first connector member which extends into the recess, in which the first connector member has a transversely extending bore, and which the fixing member extends transversely through the housing and the first connector member. The first connector member may be a rod. Other types of first connector member may be employed.

The catapult may be one in which the fixing member is a fixing pin. Other types of fixing member may be employed, for example a split pin, a screw, or a roll pin.

The catapult may be one in which the swivel joint comprises a second connector member, and in which the second connector member has a connector aperture. The connector aperture may be a bore which extends transversely through the second connector member. The second connector member may be a rod. Other types of second connector member may be employed.

When the swivel joint comprises the second member, then the catapult may be one which includes a connector ring in the connector aperture, and in which the connector ring is movable in the connector aperture. This arrangement may advantageously enable further optimised self-aligning of the first and second lengths of elastic material via the swivel joint.

The catapult may include securing means for securing to the elastic material.

The catapult may be one in which the securing means is a two-pronged pin having a pair of prongs, in which the elastic material is tubular elastic material having a longitudinally extending bore, and in which the prongs are positioned in the longitudinally extending bore and grip by friction on the elastic material defining the bore. Other types of securing means may be employed, including, for example, a tie. If desired, the elastic material may itself be tied to the connector means.

Apart from the provision of the first and the second connector means in the form of the swivel joints, the catapult of the present invention may be of a known construction. Thus, apart from the provision of the first and the second connector means in the form of the swivel joints, the catapult may comprise one or more components from known catapults.

An embodiment of the invention will now be described solely by way of example and with reference to the accompanying drawings in which:
Figure 1 is a view from the rear and above of a catapult for dispensing bait for fishing:
Figure 2 is a view from the front and below of the catapult shown in Figure 1;
Figure 3 is an enlarged view like Figure 1 and showing part of the catapult as shown in Figure 1;
Figure 4 is an enlarged view like Figure 2 and showing part of the catapult as shown in Figure 2;
Figure 5 is a front view of parts of the catapult;
Figure 6 is a rear view of parts of the catapult;
Figure 7 is a side view of parts of the catapult;
Figure 8 is an enlarged view of a right arm part of the catapult as shown in Figure 1; and
Figure 9 is an exploded partially cut-away view showing the parts of the catapult shown in Figure 8.

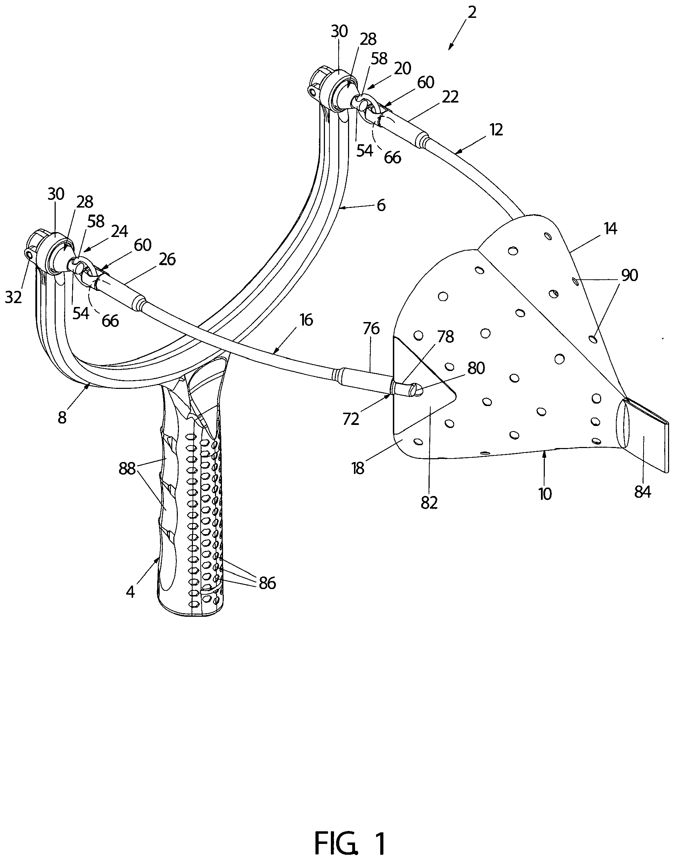

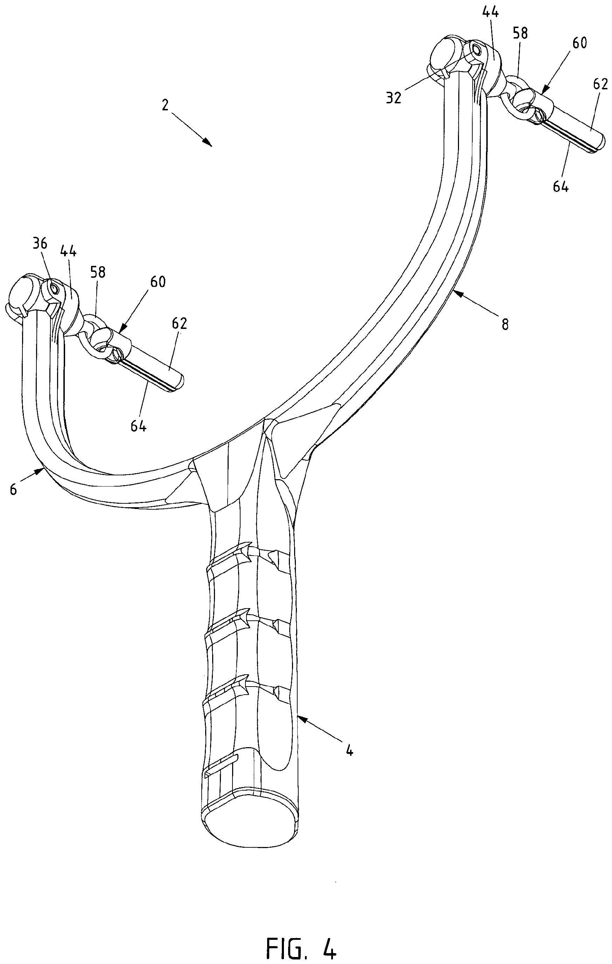

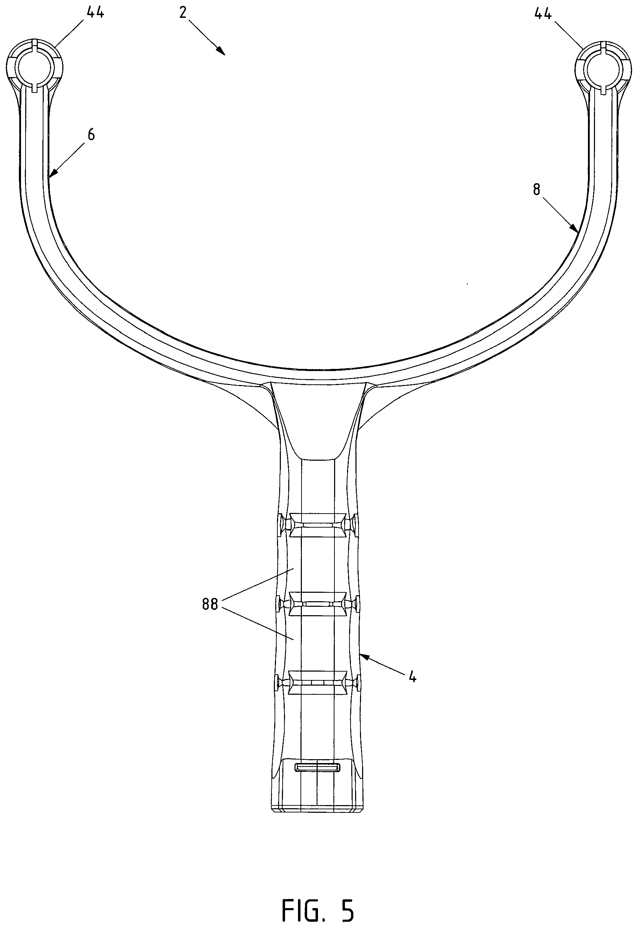

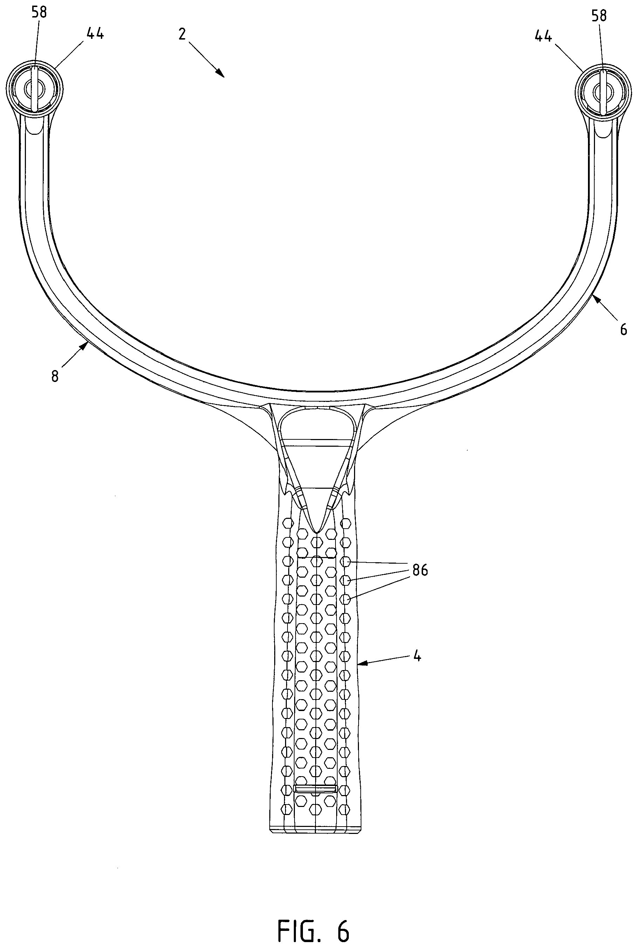

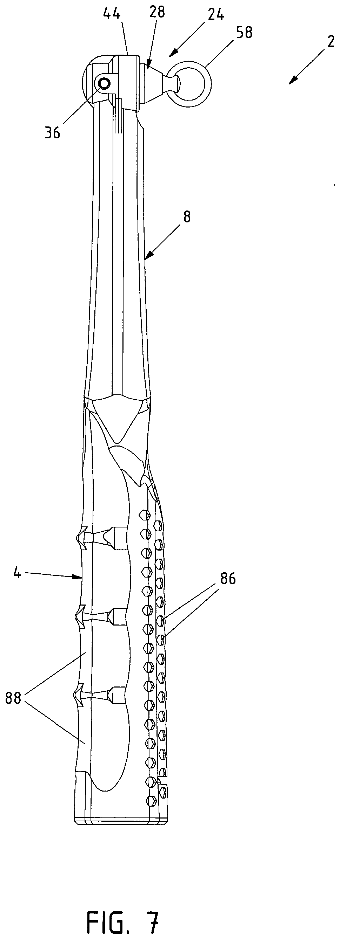

Referring to Figures 1 - 9, there is shown a catapult 2 for dispensing bait for fishing. The catapult 2 comprises a hand grip portion 4, first and second arms 6, 8, and a pouch 10. A first length of an elastic material 12 extends between the first arm 6 and a first side 14 of the pouch 10. A second length of the elastic material 16 extends between the second arm 8 and a second side 18 of the pouch 10. First connector means 20 connects a first end 22 of the first length of the elastic material 12 to the first arm 6. Second connector means 24 connects a first end 26 of the second length of the elastic material 16 to the second arm 8.

In the catapult 2 the first connector means 20 and the second connector means 24 each comprises a swivel joint 28. Thus, the catapult 2 is such that each of the first and second arms 6, 8 is provided with one of the swivel joints 28.

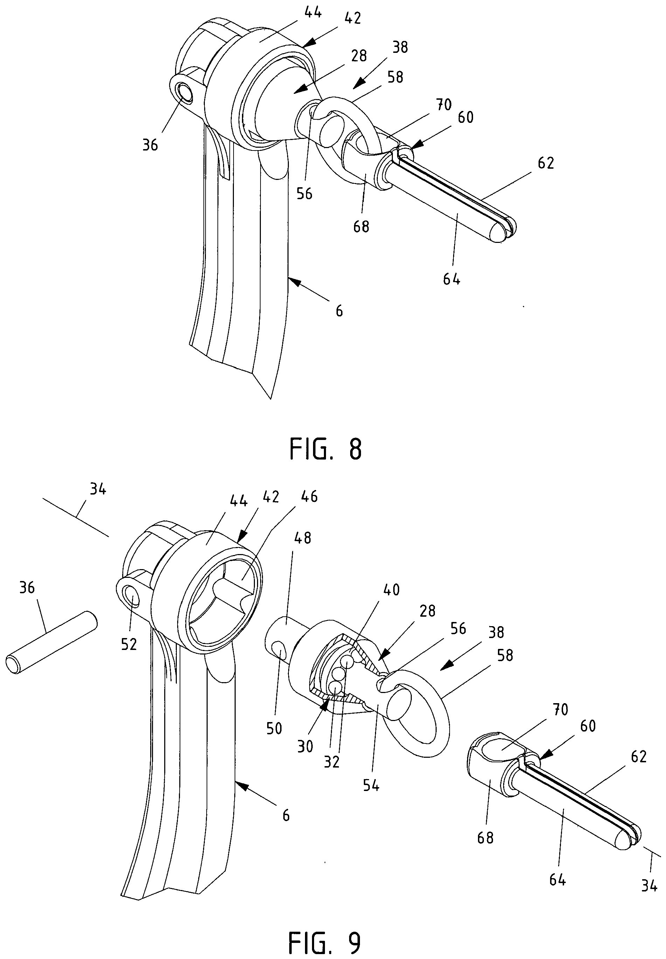

As shown in Figures 8 and 9, the swivel joint 28 comprises a rotation-providing formation in the form of a ball formation 30. The ball formation 30 comprises a plurality of balls 32.

The swivel joint 28 also comprises a fixing member 36 which is fixed to the arm 6 for the swivel joint 28 as shown in Figures 8 and 9.

The swivel joint 28 further comprises connector means 38 which extends away from the arm 6 for the swivel joint 28 and which connects to the elastic material for the arm 6 for the swivel joint 28. The arm 8 has a similar connection as can be seen from Figures 1-4.

The fixing member 36 extends transversely of a longitudinal axis 34 of the swivel joint 28 as can be appreciated from Figure 8.

The rotation-providing formation permits the connector means 38 to rotate with respect to the fixing member 36 only about the longitudinal axis of the swivel joint 28.

The ball formation 30 is in the form of a ball race. More specifically, the balls 32 are ball bearings and they are located in a ball bearing race 40.

The catapult 2 is such that each of the arms 6,8 has a connecting formation 42 to which the swivel joint 28 is connected by the fixing member 36. Figures 8 and 9 show the connecting formation 42 in detail. The connecting formation 42 comprises a housing 44 and a recess 46 in the housing 44. The swivel joint 28 extends into the recess 46. The fixing member 36 extends transversely through the housing 44 and into the swivel joint 28. More specifically, the swivel joint 28 comprises a first connector member 48 which extends into the recess 46. The first connector member 48 has a transversely extending bore 50. The fixing member 36 extends through an aperture 52 in the housing 44 of the connecting formation 42. Thus the fixing member 36 extends transversely through the housing 44 and into the transversely extending bore 50 through the first connector member 48. The first connector member 48 is a rod as shown. The fixing member 36 is a fixing pin as shown.

The connector means 38 comprises a second connector member 54. The second connector member 54 has a connector aperture 56. The connector aperture 56 is in the form of a bore which extends transversely through the second connector member 54. The second connector member 54 is in the form of a rod. The second connector member 54 is of a smaller diameter than the first connector member 48.

The connector means 38 includes a connector ring 58 which is in the connector aperture 56. The connector ring 58 is movable in the connector aperture 56. More specifically, the connector ring 58 is able to pivot from side to side with respect to the longitudinal axis 34 of the swivel joint 28. The connector ring 58 may be a split connector ring 58 so that it is easily able to be inserted into the connecting aperture 56 in the second connector member 54. The connector ring 58 is easily able to swivel in its own right and this helps to effect good alignment of the first and second lengths of elastic material 12, 16 between the first and second arms 6, 8 and the first and second sides 14, 18 respectively of the pouch 10.

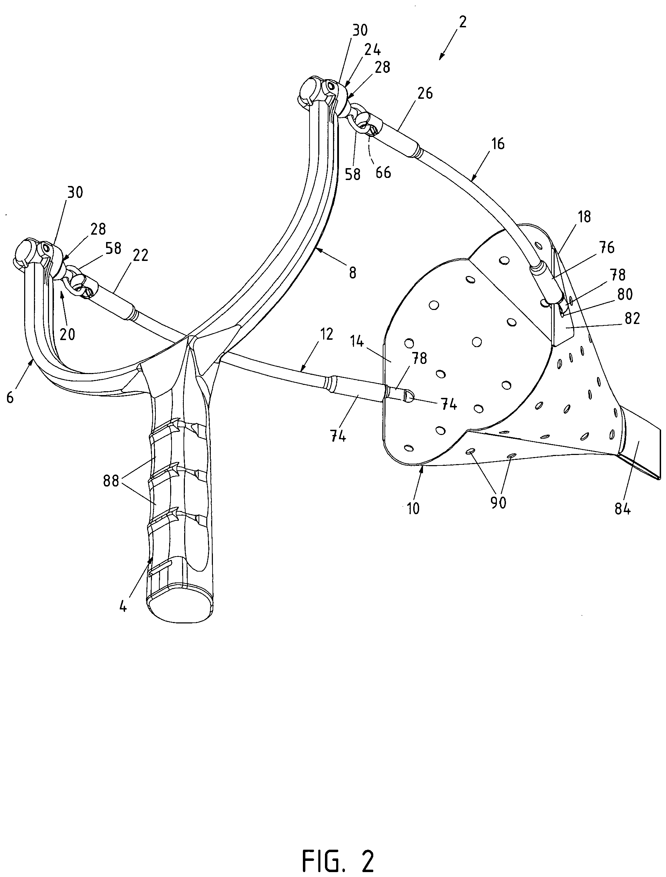

The connector means 38 further comprises securing means 60 for securing to the elastic material of the first and second lengths elastic material 12, 16. The securing means 60 is a two-pronged pin having a pair of prongs 62, 64. The elastic material is tubular elastic material having a longitudinal extending bore 66 as shown in Figures 1 and 2. The prongs 62, 64 are positioned in the bore 66 and they grip by friction on the elastic material defining the bore 66.

In assembly, the prongs 62, 64 are able to be squeezed together in order to enter the bore 66. The prongs 62, 64 then spring apart and radially expand the first and second ends 22, 26 of the first and second lengths of the elastic material 12, 16 as shown. The radially expanded elastic material tries to revert to its original shape, which thus facilitates the gripping by friction of the two prongs 62, 64 in the bore 66.

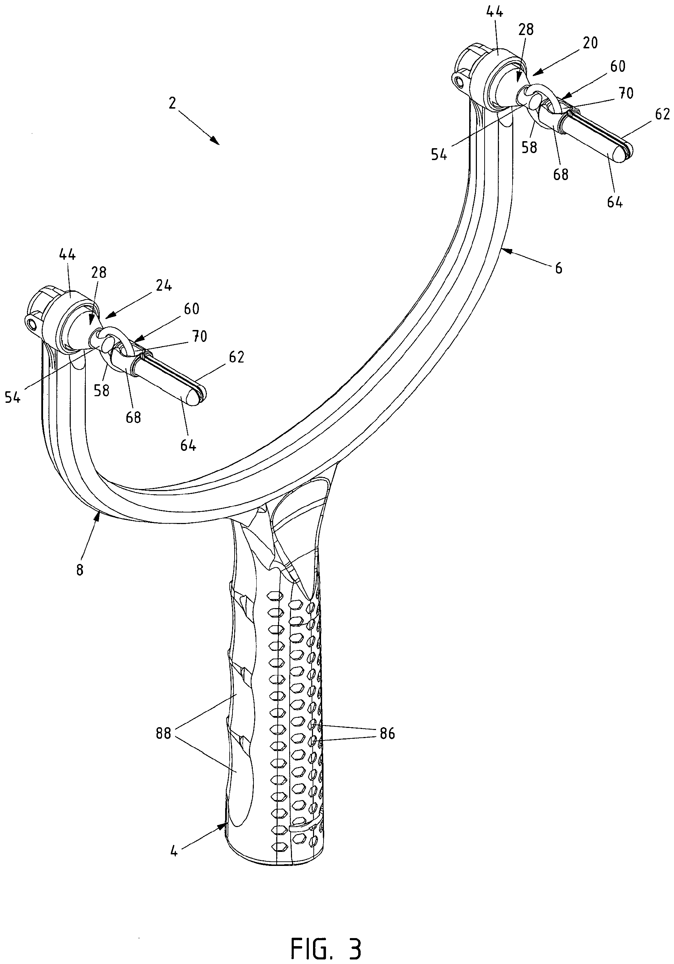

As best appreciated from Figures 3, 8 and 9, the securing means 60 has a body part 68 which is provided with an aperture 70. The aperture 70 receives the connector ring 58. In assembly, the two prongs 62, 64 can be forced apart in order to slide the connector ring 58 into position in the aperture 70. Alternatively, if the connector ring 58 is a split connector ring for facilitating its insertion into the connecting aperture 56, then the split connector ring may be forced open to enable its ends to be inserted through the aperture 70.

Referring to Figures 1 and 2, the first and second lengths of the elastic material 12, 16 are connected to the first and second sides 14, 18 of the pouch 10 by securing means 72 which is similar to the securing means 60. Thus the securing means 72 has two prongs similar to the prongs 62, 64. When these prongs are inserted into the bore 66 of the respective first and second lengths of the elastic material 12, 16, they radially expand the ends 74, 76 as shown in Figures 1 and 2. The connection to the first and second sides 14, 18 of the pouch 10 is via a band 78 passing through an aperture 80 in each of the first and second sides 14, 18. The first and second sides 14, 18 are preferably reinforced by reinforcing material 82 as shown. The pouch 10 is provided with a pull tab 84 for use in pulling the pouch 10 away from the frame of the catapult 2, which frame comprises the hand grip portion 4 and the first and second arms 6, 8.

The provision of the swivel joints 28 is advantageous in that different anglers are able to use the catapult 2 in various ways. For example, the tension in the first and second lengths of the elastic material 12, 16 may be varied in dependence upon the distance to which the bait is to be fired from the pouch 10. The catapult 2 may be inclined at an angle to the surface of the water being fished, as may be desired by an angler and in dependence upon the distance to which the bait is to be fired. Also, different anglers may typically employ different catapult holding positions and firing stances, resulting in different angles of inclination of the pouch 10 to the first and second arms 6, 8. All of these variations may cause unwanted deformation, for example twisting, of the first and second lengths of the elastic material 12, 16. Such unwanted deformation may adversely affect the firing, for example in terms of distance and/or accuracy. The swivel joints 28 act to prevent or minimise this.

The swivel joints 28 are further advantageous in that the ball formation 30 enable good alignment about the longitudinal axis 34 even when the pouch 10 is being pulled back a long way from the arms 6, 8 and thus the frictional forces caused by the first and second lengths of elastic material 12, 16 may be appreciable. Also, the swivel joints 28 are easily able to be located in the connecting formations 42 on the end of each of the arms 6, 8. Component assembly of the various parts of the swivel joints 28 and the fixing of the swivel joints 28 to the connecting formations 42 on the ends of the arms 6, 8 is an advantage in keeping assembly costs of the catapult 2 to a minimum.

The catapult 2 is such that the hand grip portion 4 has pimple formations 86 on its rear face, and finger recess formations 86 on its front face. The frame of the catapult 2 formed by the hand grip portion 4 and the first and second arms 6, 8 may be produced by moulding an appropriate material, typically a plastics material of appropriate strength. The plastics material may be reinforced if required. The pouch 10 may be made of a fabric material, leather or a plastics material.

The catapult 10 may be used to fire any form of bait. Thus the bait may be maggots, bread or whatever else may be desired. The pouch 10 is provided with apertures 90.

It is to be appreciated that the embodiment of the invention described above with reference to the accompanying drawings has been given by way of example only and that modifications may be effected. Thus, for example, the ball formation 30 may alternatively be another type of rolling formation which gives the rotation about the longitudinal axis, for example a roller formation such as a plain roller bearing or a tapered roller bearing. Other types of first and second connector means 20, 24 may be employed. The fixing member 36 and the connector means 38 may be different from those shown. The hand grip portion 2 and the first and second arms may be of designs other than those shown. The scope of the invention is defined by the appended claims.

## Claims

1. A catapult (2) for dispensing bait for fishing, which catapult (2) comprises a hand grip portion (4), first and second arms (6, 8), a pouch (10), a first length of an elastic material (12) extending between the first arm (6) and a first side (14) of the pouch (10), a second length of the elastic material (16) extending between the second arm (8) and a second side (18) of the pouch (10), first connector means (20) which connects a first end (22) of the first length of the elastic material (12) to the first arm (6), and second connector means (24) which connects a first end (26) of the second length of the elastic material (16) to the second arm (8), wherein the first connector means (20) and the second connector means (24) each comprises a swivel joint (28), and wherein the swivel joint (28) comprises:
(i) a rotation-providing formation (30);
(ii) a fixing member (36) which is fixed to the arm (6, 8) for the swivel joint (28); and
(iii) connector means (38) which extends away from the arm (6, 8) for the swivel joint (28) and which connects to the elastic material (12, 16) for the arm (6, 8) for the swivel joint (28),
and wherein:
(iv) the fixing member (36) extends transversely of a longitudinal axis of the swivel joint (28); and
(v) each of the arms (6, 8) has a connecting formation (42) to which the swivel joint (28) is connected by the fixing member (36), and wherein the connecting formation (42) comprises a housing (44) and a recess (46) in the housing (44), in which the swivel joint (28) extends into the recess (46), and in which the fixing member (36) extends transversely through the housing (44) and into the swivel joint (28), wherein the rotation-providing formation (30) permits the connector means (38) to rotate with respect to the fixing member (36) about the longitudinal axis of the swivel joint (28)

2. A catapult (2) according to claim 1 in which the rotation-providing formation (30) comprises a plurality of balls (32).

3. A catapult (2) according to claim 2 in which the rotation-providing formation (30) is a ball race.

4. A catapult (2) according to claim 1 in which the swivel joint (28) comprises a first connector member (48) which extends into the recess (46), in which the first connector member (48) has a transversely extending bore (50), and in which the fixing member (36) extends transversely through the housing (44) and the first connector member (48).

5. A catapult (2) according to claim 4 in which the first connector member (48) is a rod.

6. A catapult (2) according to any one of the preceding claims in which the fixing member (36) is a fixing pin.

7. A catapult (2) according to any one of the preceding claims in which the swivel joint (28) comprises a second connector member (54), and in which the second connector member (54) has a connector aperture (56).

8. A catapult (2) according to claim 7 in which the connector aperture (56) is a bore which extends transversely through the second connector member (54).

9. A catapult (2) according to claim 7 or claim 8 in which the second connector member (54) is a rod.

10. A catapult (2) according to any one of claims 7-9 and including a connector ring (58) in the connector aperture (56), and in which the connector ring (58) is movable in the connector aperture (56).

11. A catapult (2) according to claim 10 and including securing means (60) for securing to the elastic material (12,16).

12. A catapult (2) according to claim 11 in which the securing means (60) is a two-pronged pin having a pair of prongs (62, 64), in which the elastic material (12, 16) is tubular elastic material having a longitudinally extending bore, and in which the prongs (62, 64) are positioned in the longitudinally extending bore and grip by friction on the elastic material defining the longitudinally-extending bore.

## Patentansprüche

1. Katapult (2) zum Ausgeben von Ködern zum Angeln, wobei das Katapult (2) einen Handgriffabschnitt (4), erste und zweite Arme (6, 8), einen Beutel (10), wobei sich eine erste Länge eines elastischen Materials (12) zwischen dem ersten Arm (6) und einer ersten Seite (14) des Beutels (10) erstreckt, eine zweite Länge des elastischen Materials (16) sich zwischen dem zweiten Arm (8) und einer zweiten Seite (18) des Beutels (10) erstreckt, ein erstes Verbindungsmittel (20), das ein erstes Ende (22) der ersten Länge des elastischen Materials (12) mit dem ersten Arm (6) verbindet, und ein zweites Verbindungsmittel (24), das ein erstes Ende (26) der zweiten Länge des elastischen Materials (16) mit dem zweiten Arm (8) verbindet, umfasst, wobei das erste Verbindungsmittel (20) und das zweite Verbindungsmittel (24) jeweils ein Drehgelenk (28) umfassen, und wobei das Drehgelenk (28) umfasst:
(i) eine Drehung bereitstellende Formation (30);
(ii) ein Befestigungsglied (36), das an dem Arm (6, 8) für das Drehgelenk (28) befestigt ist; und
(iii) ein Verbindungsmittel (38), das sich von dem Arm (6, 8) weg für das Drehgelenk (28) erstreckt und das mit dem elastischen Material (12, 16) für den Arm (6, 8) für das Drehgelenk (28) verbunden ist,
und wobei:
(iv) das Befestigungsglied (36) sich quer zu einer Längsachse des Drehgelenks (28) erstreckt; und
(v) jeder der Arme (6, 8) eine Verbindungsformation (42) aufweist, mit der das Drehgelenk (28) durch das Befestigungselement (36) verbunden ist, und wobei die Verbindungsformation (42) ein Gehäuse (44) und eine Aussparung (46) in dem Gehäuse (44) umfasst, in der sich das Drehgelenk (28) in die Aussparung (46) erstreckt und in der sich das Befestigungsglied (36) quer durch das Gehäuse (44) und in das Drehgelenk (28) erstreckt, wobei die Drehung bereitstellende Formation (30) es dem Verbindungsmittel (38) ermöglicht, sich in Bezug auf das Befestigungsglied (36) um die Längsachse des Drehgelenks (28) zu drehen.

2. Katapult (2) nach Anspruch 1, bei dem die Drehung bereitstellende Formation (30) eine Vielzahl von Kugeln (32) umfasst.

3. Katapult (2) nach Anspruch 2, bei dem die Drehung bereitstellende Formation (30) eine Kugelbahn ist.

4. Katapult (2) nach Anspruch 1, bei dem das Drehgelenk (28) ein erstes Verbindungsglied (48) umfasst, das sich in die Aussparung (46) erstreckt, bei der das erste Verbindungsglied (48) eine sich quer erstreckende Bohrung (50) aufweist, und bei der sich das Befestigungsglied (36) quer durch das Gehäuse (44) und das erste Verbindungsglied (48) erstreckt.

5. Katapult (2) nach Anspruch 4, bei dem das erste Verbindungsglied (48) eine Stange ist.

6. Katapult (2) nach einem der vorstehenden Ansprüche, bei dem das Befestigungsglied (36) ein Befestigungsstift ist.

7. Katapult (2) nach einem der vorstehenden Ansprüche, bei dem das Drehgelenk (28) ein zweites Verbindungsglied (54) umfasst und bei dem das zweite Verbindungsglied (54) eine Verbindungsöffnung (56) aufweist.

8. Katapult (2) nach Anspruch 7, bei dem die Verbindungsöffnung (56) eine Bohrung ist, die sich quer durch das zweite Verbindungsglied (54) hindurch erstreckt.

9. Katapult (2) nach Anspruch 7 oder Anspruch 8, bei dem das zweite Verbindungsglied (54) eine Stange ist.

10. Katapult (2) nach einem der Ansprüche 7-9, und einen Verbindungsring (58) in der Verbindungsöffnung (56) beinhaltend, und bei dem der Verbindungsring (58) in der Verbindungsöffnung (56) beweglich ist.

11. Katapult (2) nach Anspruch 10, und ein Sicherungsmittel (60) zum Sichern an dem elastischen Material (12, 16) beinhaltend.

12. Katapult (2) nach Anspruch 11, bei dem das Sicherungsmittel (60) ein zweizackiger Stift ist, der ein Paar Zacken (62, 64) aufweist, bei dem das elastische Material (12, 16) ein rohrförmiges elastisches Material ist, das eine sich in Längsrichtung erstreckende Bohrung aufweist, und bei dem die Zacken (62, 64) in der sich in Längsrichtung erstreckenden Bohrung positioniert sind und durch Reibung an dem elastischen Material greifen, das die in Längsrichtung verlaufende Bohrung definiert.

## Revendications

1. Catapulte (2) pour distribuer des appâts pour la pêche, laquelle catapulte (2) comprend une partie de préhension (4), des premier et second bras (6, 8), une pochette (10), une première longueur d'un matériau élastique (12) s'étendant entre le premier bras (6) et un premier côté (14) de la pochette (10), une seconde longueur du matériau élastique (16) s'étendant entre le second bras (8) et un second côté (18) de la pochette (10), un premier moyen de liaison (20) qui relie une première extrémité (22) de la première longueur du matériau élastique (12) au premier bras (6), et un second moyen de liaison (24) qui relie une première extrémité (26) de la seconde longueur du matériau élastique (16) au second bras (8), dans laquelle le premier moyen de liaison (20) et le second moyen de liaison (24) comprennent chacun un joint pivotant (28), et dans laquelle le joint pivotant (28) comprend :
(i) une formation assurant la rotation (30) ;
(ii) un élément de fixation (36) qui est fixé au bras (6, 8) pour le joint pivotant (28) ; et
(iii) un moyen de liaison (38) qui s'étend à l'écart du bras (6, 8) pour le joint pivotant (28) et qui est relié au matériau élastique (12, 16) pour le bras (6, 8) pour le joint tournant (28),
et dans laquelle :
(iv) l'élément de fixation (36) s'étend transversalement à un axe longitudinal du joint pivotant (28) ; et
(v) chacun des bras (6, 8) présente une formation de liaison (42) à laquelle le joint pivotant (28) est relié par l'élément de fixation (36), et dans laquelle la formation de liaison (42) comprend un boîtier (44) et un évidement (46) dans le boîtier (44), dans lequel le joint pivotant (28) s'étend dans l'évidement (46), et dans lequel l'élément de fixation (36) s'étend transversalement à travers le boîtier (44) et dans le joint pivotant (28), dans laquelle la formation assurant la rotation (30) permet au moyen de liaison (38) de tourner par rapport à l'élément de fixation (36) autour de l'axe longitudinal du joint pivotant (28).

2. Catapulte (2) selon la revendication 1, dans laquelle la formation assurant la rotation (30) comprend une pluralité de billes (32).

3. Catapulte (2) selon la revendication 2, dans laquelle la formation assurant la rotation (30) est une bague de roulement à billes.

4. Catapulte (2) selon la revendication 1, dans laquelle le joint pivotant (28) comprend un premier élément de liaison (48) qui s'étend dans l'évidement (46), dans laquelle le premier élément de liaison (48) présente un alésage s'étendant transversalement (50), et dans laquelle l'élément de fixation (36) s'étend transversalement à travers le boîtier (44) et le premier élément de liaison (48).

5. Catapulte (2) selon la revendication 4, dans laquelle le premier élément de liaison (48) est une tige.

6. Catapulte (2) selon l'une quelconque des revendications précédentes, dans laquelle l'élément de fixation (36) est une broche de fixation.

7. Catapulte (2) selon l'une quelconque des revendications précédentes, dans laquelle le joint pivotant (28) comprend un second élément de liaison (54), et dans laquelle le second élément de liaison (54) présente une ouverture de liaison (56).

8. Catapulte (2) selon la revendication 7, dans laquelle l'ouverture de liaison (56) est un alésage qui s'étend transversalement à travers le second élément de liaison (54).

9. Catapulte (2) selon la revendication 7 ou la revendication 8, dans laquelle le second élément de liaison (54) est une tige.

10. Catapulte (2) selon l'une quelconque des revendications 7-9 et incluant un anneau de liaison (58) dans l'ouverture de liaison (56), et dans laquelle l'anneau de liaison (58) est mobile dans l'ouverture de liaison (56).

11. Catapulte (2) selon la revendication 10 et incluant des moyens de fixation (60) pour la fixation au matériau élastique (12, 16).

12. Catapulte (2) selon la revendication 11, dans laquelle le moyen de fixation (60) est une broche à deux branches présentant une paire de branches (62, 64), dans laquelle le matériau élastique (12, 16) est un matériau élastique tubulaire présentant un alésage s'étendant longitudinalement, et dans laquelle les branches (62, 64) sont positionnées dans l'alésage s'étendant longitudinalement et adhèrent par frottement au matériau élastique définissant l'alésage s'étendant longitudinalement.
